# EUROPEAN PATENT APPLICATION

(11) **EP 2 191 709 A1**
(43) Date of publication of application: **02.06.2010**
(21) Application number: 09173011.9
(22) Date of filing: 14.10.2009
(51) Int. Cl.: A01D 34/73

(54) **Knife holder for a rotary disk cutterbar**

(30) Priority: 28.10.2008 US 259517
(71) Applicant: DEERE & COMPANY, Moline, Illinois 61265-8098 (US)
(72) Inventor: Yanke, Bryan Ray, Ottumwa, IA 52501 (US)
(74) Representative: Löser, Iris

(57) **Abstract**

A rotary mower includes a rotary cutting disk (12), at least one knife (14), at least one knife pin (16), and a spring plate (18). Each knife (14) has an end (24) with an opening (26) therein. Each knife opening (26) has a double keyhole shape with a larger center hole (30) and two smaller partial holes (32) respectively on generally opposite sides of the center hole (30). Each knife pin (16) extends through a corresponding knife opening (26) and is mounted to the rotary cutting disk (12) at a corresponding knife mount location (20). Each knife pin (16) has a distal keeper (34) with a double keyhole shape which generally approximates and is slightly smaller than the double keyhole shaped opening (26) in each knife (34). The spring plate (18) is positioned under the cutting disk (12) adjacent to each distal keeper (34) of each knife pin (16).

## Description

The present invention relates to mowers, and, more particularly, to agricultural rotary mowers having multiple cutter heads.

An agricultural mower is used for cutting vegetative matter such as hay or the like. The mower includes a cutterbar which cuts the vegetative matter at a predetermined distance from the ground. The cutterbar may be in the form of a sickle cutterbar or a rotary disk cutterbar. In the case of a rotary disk cutterbar, a common platform carries a plurality of cutterbar modules, with each cutterbar module including a large oval disk with free swinging knives which cut the crop (the disks may also be other than oval shaped, such as round or triangular). The oval disks are driven with a gear train carried within the platform in a timed manner such that the working width of adjacent disks overlap but do not interfere with each other. Examples of mowers using a rotary disk cutterbar include the model Nos. 635 and 835 mower-conditioners which are sold by the applicant of the present patent application.

A rotary disk cutterbar typically includes a number of knife holders for holding the respective knives therein. Changing knives on a rotary disk cutterbar may occur relatively frequently as a result of wear and impact damage. It is known to use a spring plate nested under the cutting disk to secure the knives in place. In order to change a knife, a pry bar or the like is utilized to pry the spring plate downward so that the knife can be released and replaced. Another type of knife holder uses a clip, which is slid out using a prying mechanism. Once the blade is replaced, the clip is tapped back into place.

A knife holder that uses a spring plate as described above may also have a knife pin with an oval shaped keeper at the distal end of the pin. One end of the knife likewise includes a slightly larger and similarly shaped oval opening. To change a knife, the spring plate is pried down and the knife is rotated slightly until the oval shaped opening in the knife angularly aligns with the oval shaped keeper on the knife pin. The knife is then moved along the longitudinal axis of the knife pin and removed. Providing a knife with an oval shaped opening allows the knife to move in both rotational as well as translational directions with respect to the knife pin. The translational movement of the knife relative to the knife pin can cause premature wear of the knife pin and/or knife.

What is needed in the art is a knife holder that allows for rapid and easy changing of rotary mower/conditioner knives, without undue wear during operation.

This object is achieved with the subject matter of the independent claims. The dependent claims recite advantageous features of embodiments of the invention.

The invention in one form is directed to a knife holder assembly for a rotary disk cutterbar in a rotary mower. A knife has an end with an opening therein. The opening has a double keyhole shape with a larger center hole and two smaller partial holes respectively on generally opposite sides of the center hole. A knife pin is configured to be received within the knife opening and has a distal keeper with a double keyhole shape which generally approximates and is slightly smaller than the double keyhole shaped opening in the knife.

The invention in another form is directed to a rotary mower, including a rotary cutting disk, at least one knife, at least one knife pin, and a spring plate. The rotary cutting disk has at least one knife mount location. Each knife has an end with an opening therein. Each knife opening has a double keyhole shape with a larger center hole and two smaller partial holes respectively on generally opposite sides of the center hole. Each knife pin extends through a corresponding knife opening and is mounted to the rotary cutting disk at a corresponding knife mount location. Each knife pin has a distal keeper with a double keyhole shape which generally approximates and is slightly smaller than the double keyhole shaped opening in each knife. A spring plate is positioned under the cutting disk adjacent to each distal keeper of each knife pin.

An embodiment of the invention is shown in the drawings, in which:
Fig. 1 is a perspective, partially fragmentary view of a portion of a rotary disk cutterbar including an embodiment of a knife holder of the present invention;
Fig. 2 is another perspective, partially fragmentary view of the rotary disk cutterbar and knife holder shown in Fig. 1;
Fig. 3 is an exploded, perspective view of the rotary disk cutterbar and knife holder shown in Figs. 1 and 2;
Fig. 4 is a top view of the spring plate shown in Figs. 1-3;
Fig. 5 is a perspective view of the knife shown in Figs. 1-4;
Fig. 6 is a perspective view of the knife pin shown in Figs. 1-3;
Fig. 7 is an end view of the knife pin shown in Fig. 6; and
Fig. 8 is a side view of the knife pin shown in Figs. 6 and 7.

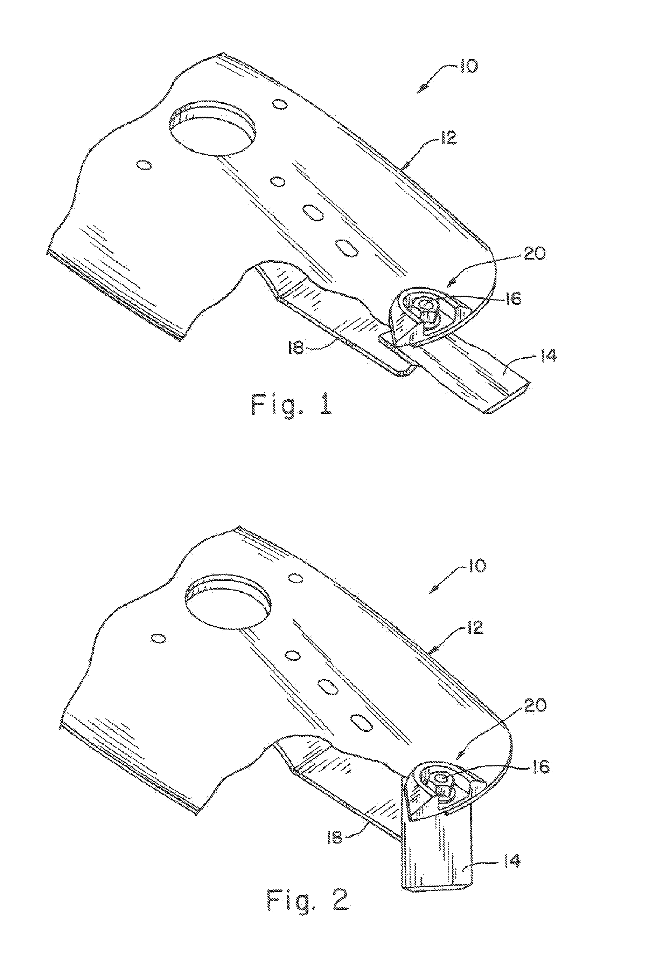

Referring now to the drawings, and more particularly to Figs. 1-3, there is illustrated a portion of a rotary disk cutterbar 10 of the present invention. Rotary disk cutterbar 10 is one of a number of rotary disk cutterbars which are arranged along the leading edge of an agricultural mower/conditioner. The rotary disk cutterbars 10 may be modularly constructed, as shown, or non-modular in construction.

Rotary disk cutterbar 10 generally includes (in addition to other parts, not illustrated) a rotary cutting disk 12, at least one knife 14, at least one knife pin 16, and a spring plate 18. In the illustrated embodiment, rotary disk cutterbar 10 includes a pair of knives 14 and a corresponding pair of knife pins 16, positioned on generally opposite ends of cutting disk 12 (only one of which is shown for simplicity).

Rotary cutting disk 12 may be similar to or generally the same as rotary cutting disks which are currently used on rotary disk cutterbars manufactured and sold by the applicant of the present application. To that end, rotary cutting disk 12 has a generally dome-shaped and oblong configuration, with a pair of knife mounting locations 20 respectively positioned at the longitudinal ends thereof. Each knife mounting location 20 includes a corresponding oblong recess 22 which is oriented along the longitudinal axis of rotary cutting disk 12. Oblong recess 22 could have a different shape, or could be oriented at a different angular orientation relative to the longitudinal axis of rotary cutting disk 12.

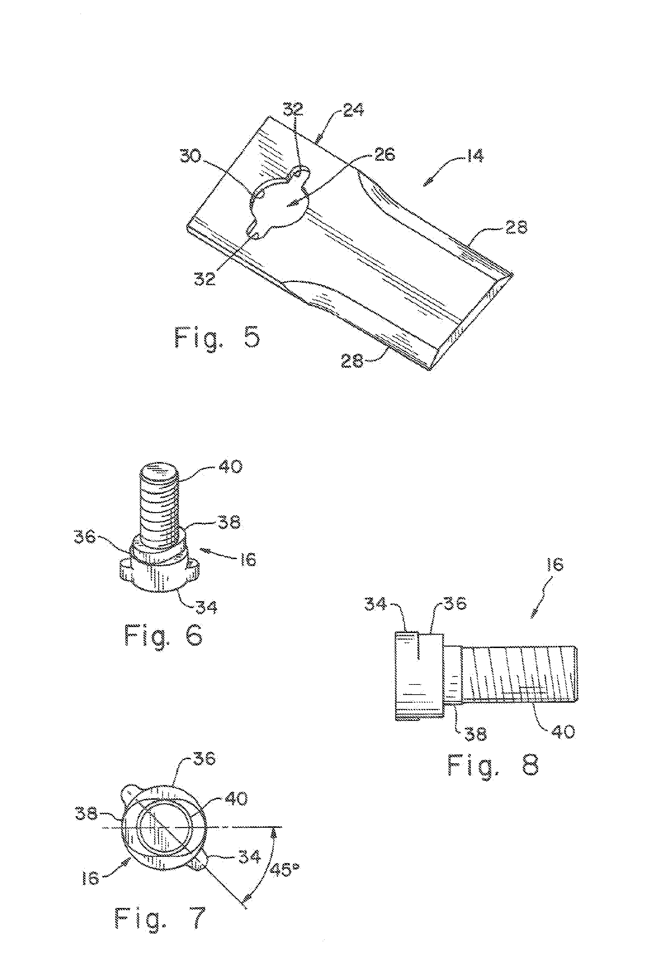

A pair of knives 14 are respectively mounted at each knife mounting location 20 on rotary cutting disk 12. Each knife 14 includes an end 24 with an opening 26 therein. A pair of cutting edges 28 extend longitudinally in an area outside of end 24 for cutting plant matter (Fig. 5). Providing each knife 14 with a pair of opposite cutting edges allows knife 14 to be removed and reversed, thereby doubling the expected operational life.

Each opening 26 defines a keyed opening having a generally round hole 30 and at least one keying feature 32. In contrast with a conventional blade having a slot-shaped opening at one end thereof, the round hole 30 of knife 14 still allows rotational movement of knife 14 about knife pin 16, but does not allow any translational movement of knife 14 relative to knife pin 16. The at least one keying feature 32 allows knife 14 to be rotated to a position other than a normal operating position and removed in a quick-attach manner. Preferably, knife 14 is rotated for removal in the same direction as the primary direction of rotation of rotary cutting disk 12. This ensures that keying feature 32 does not inadvertently line up with a corresponding keying feature on knife pin 16 in the event that knife 14 impacts a hard object (such as rock) and is rotated backward during use.

Rotary cutting disks 12 may also be configured to rotate in opposite directions to increase wear life. Configured as such, knife 14 would be rotated for removal in the same direction as the direction of rotation of rotary cutting disk 12 part of the time, and rotated for removal in a direction opposite to the direction of rotation of rotary cutting disk 12 part of the time.

In the embodiment shown, keyed opening 26 has a double keyhole shape, with round hole 30 defining a center hole and keying features 32 being in the form of two smaller partial holes which are respectively on generally opposite sides of center hole 30. Center hole 30 needs to be generally round to avoid any substantial translational movement between knife 14 and knife pin 16. However, keying features 32 need not necessarily be in the shape of a pair of smaller partial holes. For example, a single partial hole could be provided along one edge of center hole 30. Alternatively, one or more triangular-shaped keying features could be provided along an edge of center hole 30. As a further example, keyed opening 26 could be generally cam shaped with a round opening and an adjoining cam lobe shaped keying feature. Other variants are also possible.

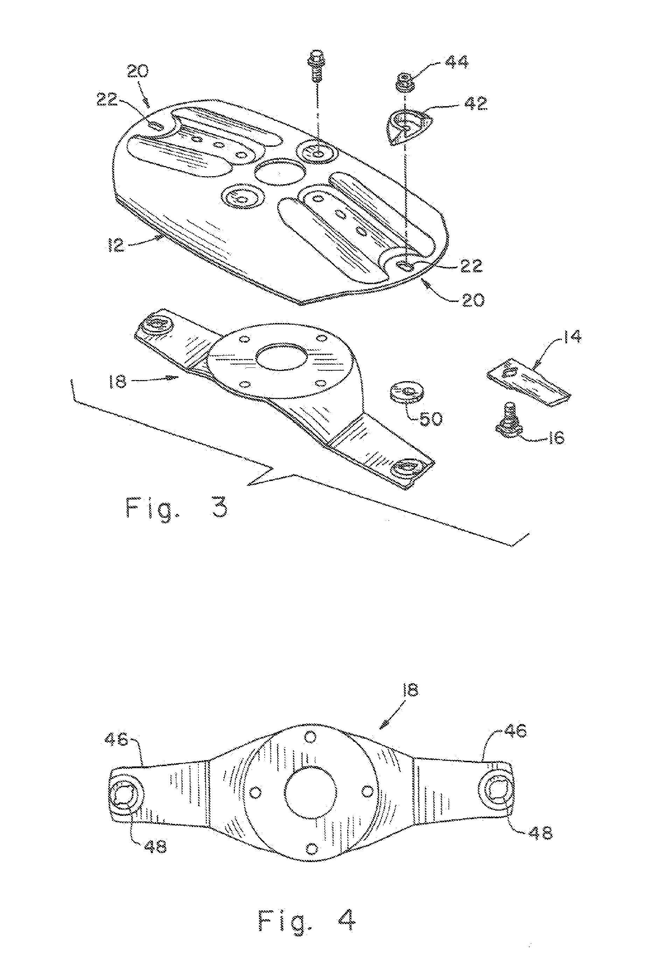

Each knife pin 16 extends through a corresponding knife opening 26 and is mounted to rotary cutting disk 12 at a corresponding knife mount location 20. Referring more specifically to Figs. 6-8, each knife pin 16 generally includes a distal keeper 34, a knife pivot 36, and oblong key 38 and a threaded portion 40. Threaded portion 40 passes through oblong recess 22 of rotary cutting disk 12, then passes through a hole in a wear cap 42, and is threaded with a nut 44 (Fig. 3). Oblong key 38 is positioned between knife pivot 36 and threaded portion 40. Oblong key 38 has the same general shape as and is slightly smaller than an oblong recess 22 in rotary cutting disk 12. Oblong key 38 fits within a corresponding oblong recess 22 to prevent rotation of knife pin 16 during both tightening of nut 44 and operation of rotary cutting disk 12.

Knife pivot 36 is positioned between oblong key 38 and distal keeper 34. Knife pivot 36 has a generally circular cross-section with a diameter which is slightly smaller than the diameter of center hole 30 of keyed opening 26. Knife pivot 36 also has a thickness along the length of knife pin 16 which is slightly more than the thickness of knife 14, thereby allowing knife 14 to rotate freely about knife pivot 36 during operation.

Distal keeper 34 has the same general shape as and is slightly smaller than keyed opening 26, thereby allowing knife 14 to be rotated and removed from knife pin 16, without removing knife pin 16. In the embodiment shown, distal keeper 34 has a double keyhole shape which generally approximates and is slightly smaller than the double keyhole shape of keyed opening 26.

Distal keeper 34 and oblong key 38 are positioned at a predetermined angular orientation relative to each other, such that knife 14 must be rotated to a predetermined position for removal from knife pin 16. In the embodiment shown, distal keeper 34 and oblong key 38 are positioned at an angular orientation of approximately 45° relative to each other (see Fig. 7). Since the oblong key 38 is received within oblong recess 22 and fixed relative to the longitudinal extension of rotary cutting disk 12, this ensures that knife 14 likewise must be rotated to a predetermined angular orientation relative to rotary cutting disk 12 for removal from knife pin 16. It is possible that a different angular orientation between oblong key 38 and distal keeper 34 may be provided, depending upon the application.

Spring plate 18 is nested within the bottom side of rotary cutting disk 12 (Figs. 1-3). Spring plate 18 includes a pair of opposite ends 46 which are positioned adjacent to a corresponding distal keeper 44 of knife pin 16 (Fig. 4). Each end 46 is manually pried away from a distal keeper 34 to allow alignment and removal of a corresponding knife 14. Each end 46 of spring plate 18 includes an opening 48 which is sized and shaped to receive a corresponding distal keeper 34 therein. In the illustrated embodiment, each opening 48 has a generally double keyhole shape which is slightly larger than each distal keeper 34.

To assemble a knife pin 36 with rotary cutting disk 12, a spacer 50 is first slid over the threaded portion 40 (Fig. 3). Spacer 50 has a thickness which is less than the thickness of oblong key 38, and has an opening which slides over oblong key 38. Oblong key 38 is received within oblong recess 22 such that the angular orientation between knife pin 16 and rotary cutting disk 12 is fixed. Wear cap 42 is placed over threaded portion 40, and nut 44 is threaded onto threaded portion 40. Knife 14 may be oriented relative to distal keeper 34 such that keyed opening 26 aligns with distal keeper 34. Knife 14 is then simply slid onto knife pin 16 and rotated to lie in an operating position surrounding knife pivot 36. In the event that rotary cutting disk 12 is already assembled with spring plate 18 therebeneath, it will be appreciated that a pry tool (not shown) is used to deflect end 46 of spring plate 18 in a downward direction to allow access to the bottom side of distal keeper 34 for installation or removal of a knife 14 from a corresponding knife pin 16. Upon removal of the pry tool, the end 46 of spring plate 18 simply returns to an at rest position in which distal keeper 44 is received within opening 48 of spring plate 18.

Although each knife 14 and knife pin 16 is shown as being used in conjunction with a rotary mower including a plurality of rotary disk cutterbars, it is also to be understood that knives 14 and knife pins 16 can be used with other types of rotary mowers.

## Claims

1. A knife holder assembly for a rotary mower, comprising:
a knife (14) including an end (24) with a keyed opening (26) therein, said keyed opening (26) having a generally round hole (30) and at least one adjoining keying feature (32); and
a knife pin (16) configured to be received within said keyed opening (26), said knife pin (16) having a distal keeper (34) with a keyed shape which generally approximates and is slightly smaller than said keyed opening (26) in said knife (14).

2. The knife holder assembly of claim 1, wherein each of said keyed opening (26) and said distal keeper (34) have a generally double keyhole shape.

3. The knife holder assembly of claim 1 or 2, wherein said at least one adjoining keying feature (32) includes two smaller partial holes respectively on generally opposite sides of said round hole (30).

4. The knife holder assembly of one of claims 1 to 3, wherein said knife pin (16) includes a knife pivot (36) with a generally circular cross section at a proximal side of said distal keeper (34), said knife pivot (36) having a diameter which is slightly smaller than a diameter of said round hole (30 in said keyed opening (26).

5. The knife holder assembly of claim 4, wherein said knife pin (16) includes a generally oblong key (34) at a proximal side of said knife pivot (36), said oblong key (34) being configured to fit into a corresponding oblong recess (22) in a cutting disk (12).

6. The knife holder assembly of claim 5, wherein said oblong key (34) is positioned at a predetermined angular orientation relative to said keyed shape of said distal keeper (16).

7. The knife holder assembly of claim 6, wherein said oblong key (34) is positioned at an angular orientation of approximately 45° relative to said keyed shape of said distal keeper.

8. The knife holder assembly of claim 5 or 6, wherein the distal keeper (34) has a double keyhole shape which generally approximates and is slightly smaller than said double keyhole shaped opening the knife (14).

9. A knife for use in an assembly according to one of claims 1 to 8, said knife including an end (24) with a keyed opening (26) therein, said keyed opening (26) having a generally round hole (30) and at least one adjoining keying feature (32).

10. A knife pin (16) for use in an assembly according to one of claims 1 to 8, said knife pin including a distal keeper (34) with a keyed shape having a generally round portion and at least one adjoining keying feature.

11. A rotary mower, comprising a rotary cutting disk (12) having at least one knife mount location (20) and at least one knife holder assembly according to one of claims 1 to 8.

12. A rotary mower according to claim 11, comprising a spring plate (18) positioned under said cutting disk (12) adjacent to each said distal keeper (34) of each said knife pin (16).

13. The rotary mower of claim 12, wherein said spring plate (18) includes at least one opening, each said opening receiving a corresponding said distal keeper (34) therein.

14. The rotary mower of claim 13, wherein each said spring plate opening has a shape which generally approximates and is slightly larger than said double keyhole shape of said corresponding distal keeper (16).
